# EUROPÄISCHE PATENTSCHRIFT

(11) **EP 1 738 236 B1**
(45) Veröffentlichungstag und Bekanntmachung des Hinweises auf die Patenterteilung: **22.08.2007**
(21) Anmeldenummer: 05741853.5
(22) Anmeldetag: 08.04.2005
(51) Int. Cl.: G05B 19/418

(54) **AUTOMATISIERUNGSNETZWERK MIT ZUSTANDSMELDENDEN NETZWERKKOMPONENTEN**
AUTOMATION NETWORK COMPRISING NETWORK COMPONENTS THAT PRODUCE STATUS MESSAGES
RESEAU D'AUTOMATISATION A COMPOSANTES RESEAU PRODUISANT DES MESSAGES D'ETAT

(30) Priorität: 08.04.2004 DE 102004017529
(43) Veröffentlichungstag der Anmeldung: 03.01.2007
(73) Patentinhaber: SIEMENS AKTIENGESELLSCHAFT, 80333 München (DE)
(72) Erfinder: BÜSGEN, Ralph, Duluth, GA 30097 (US); GLAS, Karl, 91074 Herzogenaurach (DE); KASPER, Michael, 90411 Nürnberg (DE); KOPPERS, Joachim, 91301 Forchheim (DE); KÖPKE, Andreas, 91052 Erlangen (DE)
(86) Internationale Anmeldenummer: PCT/EP2005/003738
(87) Internationale Veröffentlichungsnummer: WO 2005/098559

(56) Entgegenhaltungen:
- WO-A-01/67196
- US-A1- 2002 116 486
- US-B1- 6 728 262

## Beschreibung

Die Erfindung betrifft ein Automatisierungsnetzwerk mit wenigstens einem Automatisierungsgerät, das mit wenigstens einem Feldgerät über wenigstens eine Netzwerkkomponente vernetzt ist.

Unter dem Begriff Automatisierungsgerät wird ein Gerät verstanden, das ein Steuerprogramm zur Beeinflussung eines zu steuernden Prozesses abarbeitet. Derartige Geräte werden häufig als SPS (speicherprogrammierbare Steuerung), PLC (Programmable Logic Controller oder kurz schlicht Controller), Soft SPS oder Soft PLC bezeichnet. Ein Automatisierungsgerät kann modular aufgebaut sein und eine programmierbare Zentraleinheit sowie intelligente Module enthalten, welche einzelne Automatisierungsfunktionen übernehmen, zum Beispiel Wägung, Achsensteuerung, Regelung usw.. Zum Anschluss an-ein Netzwerk, das zum Datenaustausch mit weiteren Komponenten eines Automatisierungsnetzwerks dient, beispielsweise Netzwerkkomponenten oder Feldgeräten, kann ein zusätzliches Modul, das als Kommunikationsprozessor bezeichnet wird, vorgesehen werden.

Mit dem Begriff Feldgerät wird ein Gerät bezeichnet, das dezentral im Feld angeordnet sein kann, das heißt in einem Automatisierungsnetzwerk in der Nähe des zu steuernden Prozesses, und das Funktionen zur Erfassung von Prozessgrößen und/oder zur Beeinflussung des Prozesses ausübt. Derartige Geräte werden häufig auch als Messumformer, Sensor, Stellglied oder Aktuator bezeichnet. Sie besitzen üblicherweise Einrichtungen zum Anschluss an ein Netzwerk und nutzen zur Kommunikation Kommunikationsmechanismen der Automatisierungswelt. Beispiele für derartige Kommunikationsmechanismen auf der Basis von Ethernet sind PROFINET, Ethernet IP oder Modbus TCP. Ein Kommunikationsmechanismus wird durch das zugehörige Protokoll, das üblicherweise standardisiert ist, und die zugrunde liegende Kommunikationsbeziehung definiert. Kommunikationsbeziehungen organisieren die Kommunikation zwischen den an der Datenübertragung im Netzwerk teilnehmenden Geräten, die auch als Teilnehmer bezeichnet werden. Beispiele für Kommunikationsbeziehungen sind Client/Server, Master/Slave, Master/Master, Producer/Consumer oder Publisher/Subscriber. Als Kommunikationsprotokoll wird bei Ethernet-basierten Netzwerken häufig TCP/IP verwendet.

Die so genannten Netzwerkkomponenten dienen dem Aufbau der Netzinfrastruktur. Sie sind für die übrigen Komponenten des Automatisierungsnetzwerks, zum Beispiel für Automatisierungsgeräte und Feldgeräte, transparent, das heißt Nachrichten dieser Geräte durchlaufen die Netzwerkkomponenten, ohne dass prozessrelevante Änderungen daran vorgenommen werden. Netzwerkkomponenten üben selbst keinen Einfluss auf den Prozessablauf aus. Da Netzwerkkomponenten für Ethernet-basierte Netzwerke zunächst in der Bürowelt eingesetzt wurden, wurden bisher Kommunikationsmechanismen der Bürowelt zur Überwachung und Steuerung des Netzwerks verwandt. In der Bürowelt werden Netzwerke üblicherweise mit einem Netzwerkmanagementsystem überwacht. Die Kommunikation zwischen den Netzwerkkomponenten und einer Netzwerkmanagementstation erfolgt häufig mit SNMP (Simple Network Management Protocol), ein Protokoll, das keine Relevanz für die Prozesssteuerung hat und das Automatisierungsgeräte typischerweise nicht kennen. Eine derartige Überwachung und Steuerung des Netzwerks läuft daher unabhängig von der Prozessführung der Automatisierungsgeräte ab. Eine direkte und schnelle Reaktion eines Automatisierungsgeräts auf Probleme des Netzwerks ist daher nicht möglich.

Aus der US 2002/0116486 A1 ist ein Verfahren zur Überwachung und Steuerung eines Netzwerks bekannt, bei welchem ein Überwachungsgerät, dessen Kommunikationsmechanismen auf dem OPC (Object linking and embedding for Process Control)-Standard beruhen, eingesetzt wird. Dieser Standard findet zur Kommunikation häufig in der Automatisierungswelt Anwendung. In einer Client-Server-Beziehung greift das Überwachungsgerät auf Daten anderer, am Netzwerk befindlicher Geräte zu, die das in der Bürowelt übliche SNMP-Protokoll nutzen. Das Überwachungsgerät als Client wird an ein Gateway angeschlossen, das die SNMP-Objekte in OPC-Objekte umwandelt. Das Verfahren hat den Nachteil, dass die Kommunikation zwischen SNMP-Server und OPC-Client über eine zusätzliche Einrichtung ablaufen muss.

Der Erfindung liegt die Aufgabe zugrunde, ein Automatisierungsnetzwerk der eingangs genannten Art sowie ein Automatisierungsgerät, eine Netzwerkkomponente und ein Feldgerät für ein derartiges Automatisierungsnetzwerk zu schaffen, die eine schnelle Reaktion auf Zustandsänderungen des Netzwerks ermöglichen.

Zur Lösung dieser Aufgabe weist das neue Automatisierungsnetzwerk die Merkmale des Anspruchs 1, das neue Automatisierungsgerät die Merkmale des Anspruchs 5, die neue Netzwerkkomponente die Merkmale des Anspruchs 6 und das neue Feldgerät das Merkmal des Anspruchs 7 auf.

Die Erfindung hat den Vorteil, das Ereignisse und Zustände im Automatisierungsnetzwerk, die sich vom Sollzustand unterscheiden, sofort durch ein Automatisierungsgerät erkannt werden können. Die Netzwerkkomponenten erhalten einen bereits bei Feldgeräten üblichen Kommunikationsmechanismus, über den die Meldungen über ihren Zustand im Netzwerk von den Netzwerkkomponenten direkt in das jeweils zugeordnete Automatisierungsgerät gelangen. Ein zusätzliches Gateway oder ein Rechner für die Installation eines SNMP/OPC-Servers sind nicht mehr erforderlich. Da die Funktion der Netzwerküberwachung und -steuerung nun in das Automatisierungsgerät integriert werden kann, entfällt auch eine separate Netzwerkmanagementstation. Das erfindungsgemäße Automatisierungsnetzwerk stellt somit eine in die ohnehin vorhandenen Automatisierungskomponenten integrierte und äußerst kostengünstige Lösung einer Netzwerküberwachung und -steuerung dar. Sie ist zudem anwenderfreundlich, da die Kommunikationsmechanismen verwendet werden, die dem Automatisierungstechniker aus dem Automatisierungsbereich bekannt sind. Es ist daher kein Spezialwissen nötig.

Ein weiterer Vorteil ist darin zu sehen, dass im Automatisierungsgerät das gesamte Abbild des zu steuernden Prozesses und des Netzwerks vorliegt. Das hat zu Folge, dass Ereignisse aus dem Prozess und dem Netzwerk miteinander verknüpft werden können. Wenn beispielsweise in einem Schaltschrank durch ein Feldgerät eine Temperaturerhöhung und nahezu gleichzeitig durch eine Netzwerkkomponente ein Ausfall einer redundanten Spannungsversorgung gemeldet werden, kann im Automatisierungsgerät in einfacher Weise auf die Ursache des Spannungsversorgungsausfalls geschlossen werden, nämlich die Temperaturerhöhung im Schaltschrank, in welchem sich die Netzwerkkomponente befindet. Fällt eine weitere Spannungsversorgung der Netzwerkkomponente aus und ist somit eine hinter der Netzwerkkomponente befindliche Netzwerklinie nicht mehr erreichbar, so kann das Automatisierungsgerät gegebenenfalls die Prozesssteuerung auf ein Verfahren umstellen, dass die ausgefallenen Komponenten nicht benötigt. Es wird somit eine Erhöhung der Verfügbarkeit des Automatisierungsnetzwerks erreicht.

In vorteilhafter Weise können für eine Anzeige des Netzwerkzustands und evtl. Netzwerkfehler üblicherweise in Automatisierungsnetzwerken ohnehin vorhandene Mittel, beispielsweise eine Bedien- und Beobachtungsstation, ein Servicegerät, ein Programmiergerät oder ähnliches genutzt werden. Es sind keine zusätzlichen Geräte und keine zusätzliche Software erforderlich, da zwischen Automatisierungsgerät und Anzeigegerät sowie zwischen Netzwerkkomponente und Anzeigegerät Kommunikationsmechanismen der Automatisierungswelt genutzt werden.

In vorteilhafter Weise kann der Kommunikationsmechanismus zwischen Netzwerkkomponente und Automatisierungsgerät entsprechend einem Kommunikationsmechanismus der automatisierungstechnischen Feldkommunikation zwischen einem Feldgerät und dem Automatisierungsgerät aufgebaut werden.

Die Integration von Netzwerkkomponenten kann dabei als neue Kategorie von Feldgeräten mit definierten einheitlichen Eigenschaften in die Automatisierungswelt mit den dort herrschenden Konventionen betrachtet werden.

Feldgeräte werden üblicherweise über eine so genannte GSD (Geräte Stamm Datei) einem Engineering-System bekannt gemacht. Die GSD wird in das Engineering-System geladen und steht dann im Hardwarekatalog für weitere Projektierung zur Verfügung. Die GSD enthält neben genormten Meldungen ggf. auch spezifische/proprietäre Einträge. Über die Systemmelde-Projektierung wird den jeweiligen Ereignissen eine eindeutige Systemmeldenummer zugewiesen. Die gesamte Projektierung wird in den Controller geladen; die Meldetexte mit zugeordneten Systemmeldungen in ein B&B-System übertragen. Je nach Ereignis sendet das Feldgerät eine entsprechende Diagnose-Meldung zum Automatisierungsgerät. Im zyklischen Programmteil überprüft das Automatisierungsgerät permanent, ob Systemmeldungen vorliegen. Je nach Applikation wird die zugeordnete Meldenummer an das B&B-System gesendet und ggf. mit anderen Ereignissen verknüpft. Das B&B-System zeigt die zugeordnete Klartextmeldung an, da die Bedeutung dieser Meldenummern dem B&B-System bereits bekannt ist.

Netzwerkkomponenten werden dem Engineering nun ebenfalls über eine entsprechende GSD als neue Klasse von Feldgeräten ohne I/O-Signale (und damit den Prozess nicht beeinflussend) bekannt gemacht. Die in Automatisierungsgeräten bekannten Mechanismen für Feldgeräte werden dann auch für Netzwerkkomponenten genutzt.

In einem zweiten Schritt ist eine Normierung der GSD für die Netzwerkkomponenten angestrebt.

Eine leichte Unterscheidbarkeit der Netzwerkzustandsmeldungen der Netzwerkkomponenten von Meldungen der Feldgeräte wird vorteilhaft ermöglicht, wenn im Kommunikationsmechanismus den Netzwerkkomponenten entsprechend der bekannten Zuordnung von Klassen bei Feldgeräten eine von den Feldgeräteklassen abweichende Geräteklasse zugeordnet wird. Damit ist die Selektion und Auswertung der Meldungen der Klasse der Netzwerkkomponenten aus der Menge von Systemmeldungen im Automatisierungsgerät in einfacher Weise möglich.

Wenn eine Netzwerkkomponente in ein Feldgerät integriert ist, hat dies den Vorteil, dass der Aufwand für die Realisierung eines Automatisierungsnetzwerks verringert wird.

In vorteilhafter Weise kann der Kommunikationsmechanismus derart ausgeführt werden, dass er dem PROFINET I/O-Standard entspricht und dass die Zustandsnachrichten der Netzwerkkomponenten azyklisch übertragen werden. Das hat den Vorteil, dass keine zusätzliche Netzwerklast im Bereich der zyklischen Datenübertragung entsteht und dass die zyklische Übertragung von Prozessdaten nicht durch die azyklische Übertragung der Zustandsnachrichten beeinflusst wird.

Anhand der Zeichnungen, in denen ein Ausführungsbeispiel der Erfindung dargestellt ist, werden im Folgenden die Erfindung sowie Ausgestaltungen und Vorteile näher erläutert. Es zeigen:
- Figur 1: ein Automatisierungsnetzwerk,
- Figur 2: ein Strukturbild einer Netzwerkkomponente und
- Figur 3: ein Strukturbild eines Automatisierungsgeräts

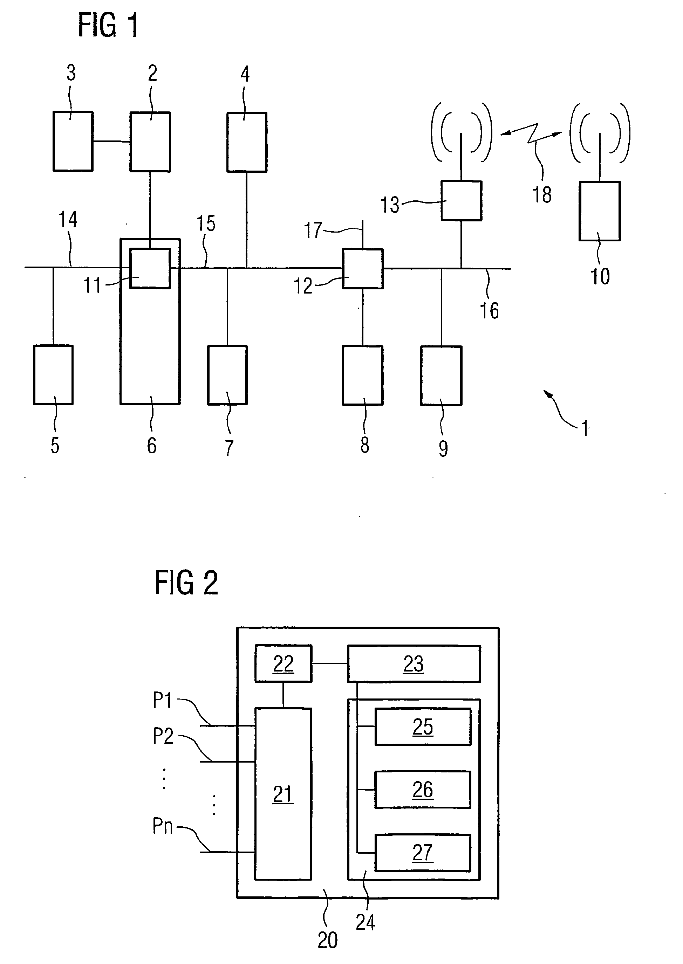

Ein Automatisierungsnetzwerk 1 umfasst gemäß Figur 1 ein Automatisierungsgerät 2, ein Programmiergerät 3 zur Projektierung des Automatisierungsnetzwerks 1, eine Bedien- und Beobachtungsstation 4, welche die Schnittstelle zu einem Anwender bildet, Feldgeräte 5, 6, 7, 8, 9 und 10, mit welchen ein zu steuernder Prozess, welcher in der Figur der Übersichtlichkeit wegen nicht dargestellt ist, beeinflussbar ist, sowie Netzwerkkomponenten 11, 12 und 13, die zur Verbindung verschiedener Segmente eines Datenübertragungsnetzwerks dienen. Die Netzwerkkomponente 11 ist in das Feldgerät 6 integriert. An einem Port der Netzwerkkomponente 11 ist das Automatisierungsgerät 2 angeschlossen, während die beiden anderen Ports mit einem Netzwerksegment 14 bzw. einem Netzwerksegment 15 verbunden sind. An einem Port der Netzwerkkomponente 12 befindet sich das Feldgerät 8. Zwei weitere Ports der Netzwerkkomponente 12 sind an das Netzwerksegment 15 bzw. an ein Netzwerksegment 16 angeschlossen. Ein vierter Port 17 der Netzwerkkomponente 12 ist nicht belegt. Die Netzwerkkomponente 13 ist mit dem Netzwerksegment 16 verbunden und dient als Access Point, das heißt als Zugangspunkt für mobile Feldgeräte mit Datenübertragung über Funk. Mit dieser Netzwerkkomponente 13 besteht für das mobile Feldgerät 10 eine Funkverbindung 18. Das Datenübertragungsnetzwerk ist auf der Basis von Ethernet realisiert und nutzt Kommunikationsmechanismen gemäß PROFINET I/O. Prozessdaten werden zwischen dem Automatisierungsgerät 2 und den Feldgeräten 5...10 zyklisch zur Gewährleistung einer performanten Prozesskommunikation übertragen. Für Meldungen der Netzwerkkomponenten 11, 12 und 13, die Fehlerzustände oder Warnhinweise betreffen, wird dagegen der azyklische Bereich genutzt. Für diese Meldungen wird ebenfalls ein Kommunikationsmechanismus gemäß PROFINET I/O genutzt, das heißt derselbe Kommunikationsmechanismus, der auch zur automatisierungstechnischen Feldkommunikation dient. Diese Zustandsmeldungen werden durch das Automatisierungsgerät 2 empfangen und ausgewertet. Ein Beispiel für derartige Zustandsmeldungen ist ein Link Down, das heißt ein Port einer Netzwerkkomponente sendet nicht mehr, beispielsweise weil das Kabel zum Anschluss des jeweiligen Segments an den Port abgefallen ist. Ein weiteres Beispiel ist die Meldung einer Netzwerkkomponente, dass eine redundante Spannungsversorgung ausgefallen ist und daher nur noch eine Spannungsversorgung zum Weiterbetrieb der Netzwerkkomponente zur Verfügung steht. Da im Automatisierungsgerät 2 ständig das gesamte Abbild (Prozesswerte und Diagnosestatus) des zu steuernden Prozesses und des Datenübertragungsnetzwerks vorliegt, kann das Steuerungsprogramm des Automatisierungsgeräts die Ereignisse aus Prozess und Netzwerk miteinander verknüpfen und in geeigneter Weise auf von den Netzwerkkomponenten gemeldete Fehlerzustände reagieren. Die Netzwerkkomponenten 11, 12 und 13 werden als eine gesonderte Klasse von Feldgeräten gemäß PROFINET I/O-Standard modelliert. Dadurch sind die Prozessmeldungen leicht von Zustandsmeldungen des Datenübertragungsnetzwerks unterscheidbar. Änderungen des Prozesssowie des Netzwerkzustands werden einem Anwender auf der Bedien- und Beobachtungsstation 4 angezeigt. An der Bedien- und Beobachtungsstation 4 können direkt aus den Netzwerkkomponenten 11, 12 und/oder 13 gewonnene Detailinformationen über das Datenübertragungsnetzwerk angezeigt werden. Anhand dieser Detailinformationen kann durch den Anwender entschieden werden, wie ein eventueller Fehlerzustand in einer der Netzwerkkomponenten 11, 12 oder 13 zu beheben ist.

Die Projektierung des Automatisierungsnetzwerks 1 kann beispielsweise folgendermaßen ablaufen:

Das Automatisierungsgerät 2 wird durch das Programmiergerät 3 als Engineering-Station beispielsweise mit STEP7-Software projektiert und erhält unter anderem seine Netzwerkadresse für das Datenübertragungsnetzwerk. Das Automatisierungsgerät 2 versorgt dann alle Geräte, das heißt die Feldgeräte 5...10 sowie die Netzwerkkomponenten 11, 12 und 13, die dem Automatisierungsgerät 2 für den zu steuernden Prozess zugeordnet sind, der ein Teilprozess eines größeren sein kann, mit weiteren Daten. Somit erhalten die Netzwerkkomponenten 11, 12 und 13 auf dieselbe Weise wie die Feldgeräte 5...10 ihre jeweilige Netzwerkadresse vom Automatisierungsgerät 2. Weiterhin kann über das Engineering festgelegt werden, welche Daten der Netzwerkkomponenten 11, 12 und 13 in die Systemdiagnose einbezogen werden.

In Figur 2 ist beispielhaft ein in Funktionsblöcke gegliederter Aufbau einer Netzwerkkomponente 20 dargestellt, die für einen Einsatz in dem anhand Figur 1 erläuterten Automatisierungsnetzwerk geeignet ist. Die Netzwerkkomponente 20 besitzt n Ports P1, P2...Pn. Diese Ports sind an einen Physical Layer Baustein 21 angeschlossen, der durch ein Switch ASIC 22 angesteuert wird. Zur Realisierung der Kommunikationsmechanismen dient weiterhin eine CPU 23 mit einem Betriebsprogramm 24. Das Betriebsprogramm 24 realisiert u.a. einen so genannten SNMP-Agent 25, einen Webserver 26 und eine Field Device Modellierung 27.

Ein SNMP-Agent ist ein typischer Zugang zu Netzwerkkomponenten für Netzwerkadministratoren. Die Netzwerkkomponente 20 präsentiert sich dem Administrator über den SNMP-Agent 25, der eine übergeordnete Netzwerkdiagnose gestattet. Diese ist jedoch isoliert von der Diagnose und Steuerung des zu steuernden Prozesses.

Webserver bieten Zugang zur Diagnose einzelner Geräte. Im gezeigten Ausführungsbeispiel dient der Webserver 26 zur Diagnose der Netzwerkkomponente 20, die sich einem Anwender mit seinem Web-Interface über einen Browser präsentiert. Diese Diagnoseart ist ebenfalls isoliert von der Diagnose und Steuerung des Prozesses.

Durch die Field Device Modellierung 27 stellt sich die Netzwerkkomponente 20 dem Anwender als Repräsentant einer speziellen Klasse von Feldgeräten dar. Die zugrunde liegenden Kommunikationsmechanismen gestatten eine vollständige Einbindung der Diagnose und Steuerung der Netzwerkkomponente 20 in die Prozesssteuerung und Diagnose, die in dem zuvor beschriebenen Automatisierungsnetzwerk 1 gemäß Figur 1 durch das Automatisierungsgerät 2 erfolgt.

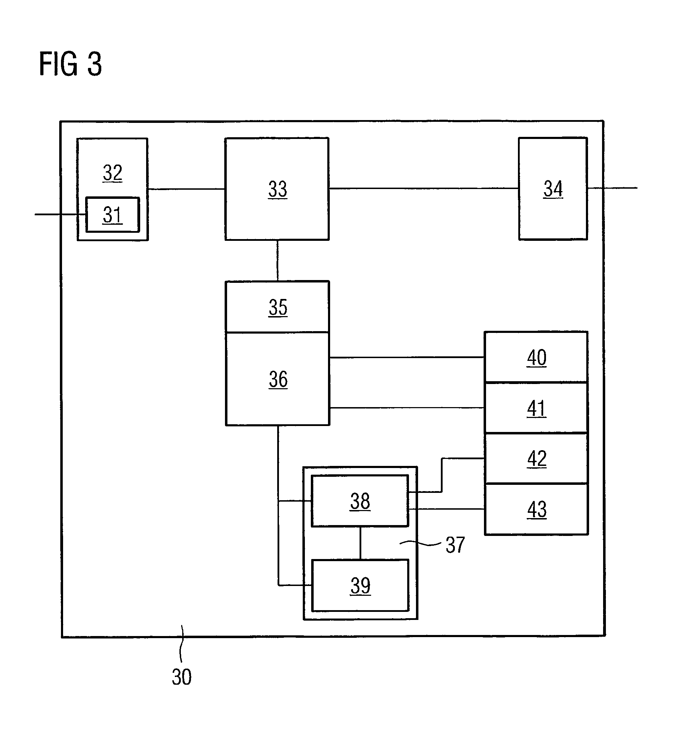

Ein Automatisierungsgerät 30 enthält gemäß Figur 3 zur Kommunikation einen Physical Layer Baustein 31, der einen Bestandteil eines Kommunikationsprozessors 32 bildet. Die übertragenen oder zu übertragenden Daten tauscht der Kommunikationsprozessor 32 mit einer CPU 33 aus. Eine Schnittstelle 34 dient zum Anschluss eines Programmiergeräts an das Automatisierungsgerät 30. Alternativ ist auch der direkte Anschluss eines Programmiergerätes an das Netzwerk mit vollem Zugriff auf das Automatisierungsgerät möglich. Zum Betrieb der CPU 33 dient ein Betriebssystem 35. Eine Ablaufsteuerung 36 steuert den Ablauf eines Anwenderprogramms 37, das aus einem zyklischen Teil 38, in welchem das Anwenderprogramm 37 prozessspezifisch reagiert, und einem azyklischen Teil 39 mit ereignisgesteuerter Reaktion besteht. Durch die Ablaufsteuerung 36 wird fortlaufend eine Diagnosezustandsliste 40 aktualisiert und Meldungen werden in einem Meldepuffer 41 protokolliert. Vom azyklischen Teil 39 des Anwenderprogramms werden Daten der Netzwerkkomponenten an den zyklischen Teil 38 übergeben, um eine prozessspezifische Reaktion auf Veränderungen zu ermöglichen. Die Daten der Feldgeräte und der Netzwerkkomponenten werden durch den zyklischen Teil 38 in einem Speicher 42 bzw. einem Speicher 43 hinterlegt. Die beiden Speicher 42 bzw. 43 können als logische Abschnitte in einem größeren Speicherbereich verstanden werden. Somit liegt im Automatisierungsgerät 30 ein vollständiges Abbild des Prozesses und des Netzwerks vor. Sowohl der zyklische Teil 38 als auch der azyklische Teil 39 des Anwenderprogramms 37 können Meldungen, die zu einer Bedien- und Beobachtungsstation übertragen werden, erzeugen. Zudem können der Meldepuffer 41 sowie die Speicher 42 und 43 durch eine Bedien- und Beobachtungsstation ausgelesen werden. Ein Engineering-System, beispielsweise ein Programmiergerät, kann zur Auswertung auf die Diagnosezustandsliste 40 und den Meldepuffer 41 lesend zugreifen. An der gezeigten Struktur des Automatisierungsgeräts 30 wird besonders deutlich, dass aufgrund des sofortigen Erkennens von Ereignissen im Netzwerk, das im gezeigten Ausführungsbeispiel im azyklischen Teil 39 des Anwenderprogramms 37 stattfindet, eine direkte und schnelle Reaktion des Automatisierungsgeräts 30 ähnlich einer Reaktion auf Veränderungen des Prozesszustands ermöglicht wird.

## Patentansprüche

1. Automatisierungsnetzwerk mit wenigstens einem Automatisierungsgerät (2), das mit wenigstens einem Feldgerät (5...10) über wenigstens eine Netzwerkkomponente (11, 12, 13), die zur Verbindung verschiedener Segmente eines Datenübertragungsnetzwerks dient, vernetzt ist, **dadurch gekennzeichnet, dass** die Netzwerkkomponenten (11, 12, 13) dazu ausgebildet sind, Meldungen über ihren Zustand mit einem Kommunikationsmechanismus der automatisierungstechnischen Feldkommunikation nach dem PROFINET-, Ethernet IP- oder Modbus TCP-Standard an das Automatisierungsgerät (2) zu senden und dass das Automatisierungsgerät (2) dazu ausgebildet ist, die Zustandsmeldungen zu empfangen, auszuwerten und anhand der Zustandsmeldungen den Betrieb des Automatisierungsnetzwerks zu überwachen.

2. Automatisierungsnetzwerk nach Anspruch 1, **dadurch gekennzeichnet, dass** der Kommunikationsmechanismus entsprechend einem Kommunikationsmechanismus der automatisierungstechnischen Feldkommunikation zwischen einem Feldgerät (5...10) und dem Automatisierungsgerät (2) aufgebaut ist.

3. Automatisierungsnetzwerk nach Anspruch 2, **dadurch gekennzeichnet, dass** im Kommunikationsmechanismus einer Netzwerkkomponente (11, 12, 13) entsprechend der bekannten Zuordnung von Klassen bei Feldgeräten eine von den Feldgeräteklassen abweichende Geräteklasse zugeordnet ist.

4. Automatisierungsnetzwerk nach einem der vorhergehenden Ansprüche, **dadurch gekennzeichnet, dass** der Kommunikationsmechanismus dem PROFINET I/O-Standard entspricht und dass die Netzwerkkomponenten (11, 12, 13) dazu ausgebildet sind, die Zustandsnachrichten azyklisch zu übertragen.

5. Automatisierungsgerät für ein Automatisierungsnetzwerk nach einem der vorhergehenden Ansprüche, **dadurch gekennzeichnet, dass** das Automatisierungsgerät (2) dazu ausgebildet ist, Meldungen über den Zustand von Netzwerkkomponenten (11, 12, 13), welche diese mit einem Kommunikationsmechanismus der automatisierungstechnischen Feldkommunikation nach dem PROFINET-, Ethernet IP- oder Modbus TCP-Standard an das Automatisierungsgerät (2) senden, zu empfangen, auszuwerten und anhand der Zustandsmeldungen den Betrieb des Automatisierungsnetzwerks zu überwachen.

6. Netzwerkkomponente für ein Automatisierungsnetzwerk nach einem der vorhergehenden Ansprüche, **dadurch gekennzeichnet, dass** die Netzwerkkomponenten (11, 12, 13) dazu ausgebildet sind, Meldungen über ihren Zustand mit einem Kommunikationsmechanismus der automatisierungstechnischen Feldkommunikation nach dem PROFINET-, Ethernet IP- oder Modbus TCP-Standard an ein Automatisierungsgerät (2) im Automatisierungsnetzwerk (1) zu senden.

7. Feldgerät, in welches eine Netzwerkkomponente (11) gemäß Anspruch 6 integriert ist.

## Claims

1. Automation network with at least one automation equipment (2), which is interconnected with at least one field device (5...10) via at least one network component (11, 12, 13), which is used for connecting different segments of a data transmission network, **characterised in that** the network components (11, 12, 13) are adapted so as to transmit messages concerning their status to the automation equipment (2) by means of a communication mechanism that functions according to field communication automation technology in accordance with the PROFINET, Ethernet IP or Modbus TCP standard and **in that** the automation equipment (2) is adapted so as to receive the status messages, evaluate them, and monitor the operation of the automation network using the status messages.

2. Automation network according to claim 1, **characterised in that** the communication mechanism is constructed in accordance with a communication mechanism that functions according to field communication automation technology between a field device (5...10) and the automation equipment (2).

3. Automation network according to claim 2, **characterised in that** a network component (11, 12, 13) is allocated a device class diverging from the field device classes in accordance with the known allocation of classes for field devices within the communication mechanism.

4. Automation network according to one of the preceding claims, **characterised in that** the communication mechanism complies with the PROFINET I/O standard and **in that** the network components (11, 12, 13) are adapted so as to transmit the status messages in an acyclic manner.

5. Automation equipment for the automation network according to one of the preceding claims, **characterised in that** the automation equipment (2) is adapted so as to receive messages concerning the status of network components (11, 12, 13), which said network components transmit to the automation equipment (2) by means of a communication mechanism that functions according to field communication automation technology in accordance with the PROFINET, Ethernet IP or Modbus TCP standard, evaluate them, and monitor the operation of the automation network using the status messages.

6. Network component for the automation network according to one of the preceding claims, **characterised in that** the network components (11, 12, 13) are adapted so as to transmit messages concerning their status to an automation equipment (2) in the automation network (1) by means of a communication mechanism that functions according to field communication automation technology in accordance with the PROFINET, Ethernet IP or Modbus TCP standard.

7. Field device within which a network component (11) as defined in claim 6 is integrated.

## Revendications

1. Réseau d'automatisation comprenant au moins un appareil d'automatisation (2) qui est mis en réseau avec au moins un appareil de terrain (5 à 10) par l'intermédiaire d'au moins un composant de réseau (11, 12, 13) qui sert à la liaison de différents segments d'un réseau de transmission de données, **caractérisé par le fait que** les composants de réseau (11, 12, 13) sont conçus pour envoyer à l'appareil d'automatisation (2) des messages concernant leur état avec un mécanisme de communication de la communication de terrain en technique d'automatisation selon le standard PROFINET, Ethernet IP ou Modbus TCP et **par le fait que** l'appareil d'automatisation (2) est conçu pour recevoir et évaluer les messages d'état et pour surveiller à l'aide des messages d'état le fonctionnement du réseau d'automatisation.

2. Réseau d'automatisation selon la revendication 1, **caractérisé par le fait que** le mécanisme de communication est construit selon un mécanisme de communication de la communication de terrain en technique d'automatisation entre un appareil de terrain (5 à 10) et l'appareil d'automatisation (2).

3. Réseau d'automatisation selon la revendication 2, **caractérisé par le fait que**, dans le mécanisme de communication, il est associé à un composant de réseau (11, 12, 13), conformément à l'association connue de classes pour des appareils de terrain, une classe d'appareil différente des classes d'appareils de terrain.

4. Réseau d'automatisation selon l'une des revendications précédentes, **caractérisé par le fait que** le mécanisme de communication correspond au standard PROFINET I/O et **par le fait que** les composants de réseau (11, 12, 13) sont conçus pour transmettre les messages d'état de façon acyclique.

5. Appareil d'automatisation pour un réseau d'automatisation selon l'une des revendications précédentes, **caractérisé par le fait que** l'appareil d'automatisation (2) est conçu pour recevoir et évaluer des messages qui concernent l'état de composants de réseau (11, 12, 13) et que ceux-ci envoient à l'appareil d'automatisation (2) avec un mécanisme de communication de la communication de terrain en technique d'automatisation selon le standard PROFINET, Ethernet IP ou Modbus TCP et pour surveiller à l'aide des messages d'état le fonctionnement du réseau d'automatisation.

6. Composant de réseau pour un réseau d'automatisation selon l'une des revendications précédentes, **caractérisé par le fait que** les composants de réseau (il, 12, 13) sont conçus pour envoyer à un appareil d'automatisation (2) dans le réseau d'automatisation (1) des messages concernant leur état avec un mécanisme de communication de la communication de terrain en technique d'automatisation selon le standard PROFINET, Ethernet IP ou Modbus TCP.

7. Appareil de terrain dans lequel est intégré un composant de réseau 11 selon la revendication 6.
